# EUROPEAN PATENT APPLICATION

(11) **EP 2 301 700 A1**
(43) Date of publication of application: **30.03.2011**
(21) Application number: 09768725.5
(22) Date of filing: 07.04.2009
(51) Int. Cl.: B23D 45/02, B23D 45/14, B23D 47/04, B27B 5/20

(54) **MITRE SAW**

(30) Priority: 23.06.2008 CN 200810128593
(71) Applicant: Positec Power Tools (Suzhou) Co., Ltd., Suzhou Jiangsu 215006 (CN)
(72) Inventor: BROWN, Warren, Mount Evelyn Victoria 3796 (AU); GERHARDT, Graham, Warrandyte Victoria 3133 (AU); SZOMMER, Harry, Carrum Downs Victoria 3201 (AU)
(74) Representative: Stuttard, Garry Philip
(86) International application number: PCT/CN2009/071171
(87) International publication number: WO 2009/155800

(57) **Abstract**

A miter saw comprises a worktable; a first support member attached to the worktable; a second support member attached to the first support member; a saw unit pivotally connected to the second support member via a pivot; and a matching mechanism disposed between the first support member and the second support member, the matching mechanism is operated to cause the second support member to move with respect to the first support member, and the second support member is moved to reach a plurality of predetermined working positions to perform cutting operation. Thus, the cutting capacity of the miter saw is improved for the miter saw being able to cut workpieces with more specifications.

## Description

### Field of the Invention

The present invention relates to a miter saw, and more particularly to a support device of the miter saw for supporting a saw unit.

### Background of the Invention

A conventional miter saw as a cutting tool has very wide using range. The miter saw is used for quickly and expediently cutting many metallic or nonmetallic materials. In general, the miter saw comprises a worktable, a saw unit having a motor and a blade disposed above the worktable, and a fence mounted on the worktable for stopping a workpieces. The saw unit is pivotally connected to the worktable via a pivot immovable with respect to the worktable. Therefore, the saw unit can cut the workpieces. But the distance between the pivot and the fence of the conventional miter saw keeps invariableness, so a cutting capacity of the conventional miter saw is limited. That is to say, a admissible specification of the workpieces to be cut is limited to a certain range so the conventional miter saw isn't able to cut more specifications workpieces. The conventional miter saw doesn't completely satisfy requirements of an operator.

To improve the cutting capacity of the miter saw, persons skilled in the art have made some improvements. For instance, the fence is disposed on the worktable in such a manner that the fence is moveable along a longitudinal direction of the saw unit. Thus the cutting capacity of the miter saw is improved. But it is difficult to assure that the fence is perpendicular to a work surface of the worktable after the fence is moved relative to the worktable. So a cutting precision of the miter saw is affected.

### Summary of the Invention

One object of the present invention is to provide a miter saw having a compact structure, a lower cost and a higher cutting capacity.

Another object of the present invention is to provide a miter saw having a higher cutting precision.

According to one object of the present invention, a miter saw comprises a worktable for being placed with a workpieces; a first support member attached to the worktable, the first support member defines a longitudinal axis extending along a frontward and backward direction; a second support member attached to the first support member, a saw unit pivotally connected to the second support member via a pivot, the saw unit comprises a motor and a blade rotatably driven by the motor; a matching mechanism disposed between the first support member and the second support member, the matching mechanism is operated to cause the second support member to move with respect to the first support member frontward and backward

The second support member is movable with respect to the first support member to a plurality of predetermined working positions and then to perform cutting operation.

The miter saw further comprises an indicating mechanism for indicating the working positions.

The indicating mechanism comprises working position signs disposed on one of the first support member and the second support member, and indicating signs disposed on the other one of the first support member and the second support member, the indicating sign is facing to the working position sign when the second support member is moved to corresponding the work position. wherein the indicating sign is disposed on the second support member, and is aligned with the pivot in the direction perpendicular to the longitudinal axis.

The matching mechanism comprises a guide groove disposed on one of the first support member and the second support member, and a guide block disposed on the other one of the first support member and the second support member for connecting with the guide groove.

The miter saw further comprises a positioning mechanism for determining the position of the second support member at the corresponding working positions. The positioning mechanism comprises a stop groove disposed on one of the first support member and the second support member, and a stop member disposed on the other one of the first support member and the second support member. The stop member is connected to the stop groove when the second support member is moved to corresponding working positions.

The miter saw further comprises a lock mechanism for reliable fixing of the second support member at the corresponding working positions. The lock mechanism comprises a lock member disposed on one of the first support member and the second support member, and a contact surface disposed on the other one of the first support member and the second support member. The lock member will closely contact with the contact surface when the second support member moves to corresponding working positions.

Compared with the prior arts, the present invention has some advantages. The second support member is movable with respect to the first support member to a plurality of predetermined working positions to perform cutting operation. Such that the cutting capacity of the miter saw is improved. The miter saw is able to cut more specifications of workpieceso The second support member is fixable at predetermined working positions to improve the cutting precision. In addition, the saw unit is connected to the worktable via the first support member and the second support member, the matching mechanism disposed between the first support member and the second support member has a guide groove and guide block, so the miter saw has a compact structure and a lower cost.

### Brief Description of the Drawings

Fig. 1 is a perspective view of a miter saw according to a first embodiment of the present invention;
Fig. 2 is a exploded perspective view of a miter saw shown in Fig. 1;
Fig. 3 is a front elevation view of a miter saw shown in Fig. 1 with the second support member in a first work position;
Fig. 4 is a front elevation view of a miter saw shown in Fig. 1 with the second support member in a second work position;
Fig. 5 is a front elevation view of a miter saw shown in Fig. 1 with the second support member in a third work position;
Fig. 6 is a front elevation view of a miter saw shown in Fig. 1 with the second support member in the first work position;
Fig. 7 is a partial exploded perspective view of a miter saw shown in Fig. 1;
Fig. 8 is a schematic view of a matching mechanism of a miter saw according to a second embodiment of the present invention;
Fig. 9 is a schematic view of a matching mechanism of a miter saw according to a third embodiment of the present invention;

| | | | |
|---|---|---|---|
| 1. | base | 10. | lock device |
| 11. | thread hole | 12,12b. | lock member |
| 13b. | first lock hole | 14b. | second lock hole |
| 15b. | third lock hole | 2. | worktable |
| 21. | cutting groove | 22. | front side |
| 23. | rear side | 24. | fence |
| 25. | anti-falling support rack | 3. | saw unit |
| 31. | blade | 32. | blade shaft |
| 33. | motor | 35. | fixed guard |
| 36. | handle | 37. | carrying handle |
| 4. | first support member | 41. | longitudinal axis |
| 42. | lock mechanism | 43. | contact surface |
| 5. | second support member | 6. | pivot |
| 7. | matching mechanism | 71. | guide groove |
| 72. | guide block | 71a. | guide groove |
| 72a. | guide block | 8. | indicating mechanism |
| 81. | working position signs | 811. | first working position sign |
| 812. | second working position sign | 813. | third working position sign |
| 82. | indicating sign | 9. | positioning mechanism |
| 91. | first receiving groove | 91b. | first receiving groove |
| 92b. | second receiving groove | 93. | third receiving groove |
| 92. | second receiving groove | 93. | third receiving groove |
| 94. | stop groove | 95b. | stop pin |
| 100. | miter saw | 200. | workpieces |

### Detailed Description of the Embodiments

The present invention will be described in more details later with reference to the appended Figures and preferred embodiment.

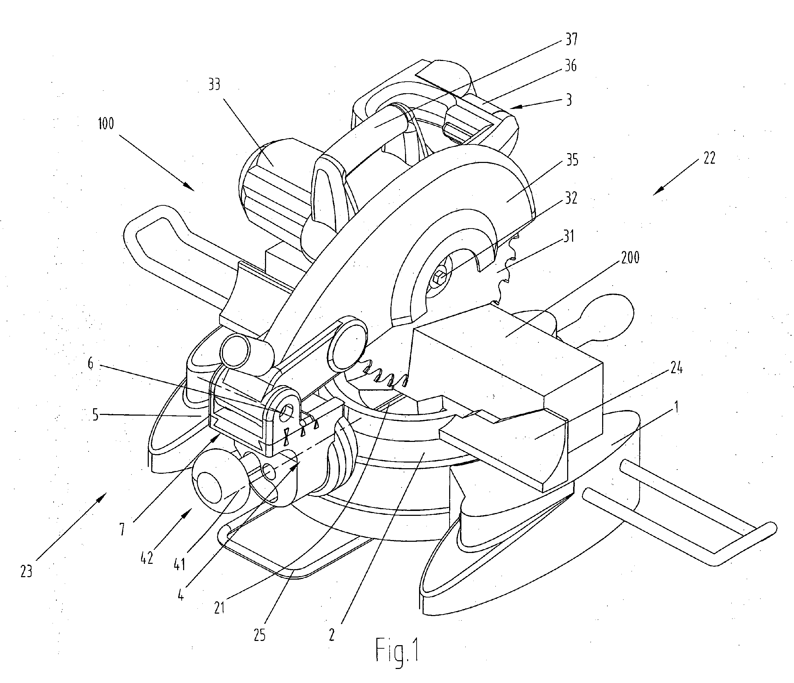

Referring to FIG. 1, a miter saw 100 comprises a base, a worktable 2 for supporting workpieces 200 to be cut, a first support member 4 attached to the worktable 2, a second support member 5 attached to the first support member 4, and a saw unit 3 attached to the second support member 5. The saw unit 3 is pivotally connected to the second support member 5 via a pivot 6, such that the saw unit 3 can be pivoted up and down relative to the base 1 to cut the workpieces vertically.

The first support member 4 defines a longitudinal axis 41, the first support member 4 is pivotable clockwise and anticlockwise to incline to a determined angle relative to the worktable 2 to cut the workpieces. A lock mechanism disposed between the first support member 4 and the worktable 2 locks the first support member 4 on the worktable 2.

The first support member 4 and the second support member 5 are all made of iron-based materials, such as cast iron, ferroalloy. Iron-based materials are used to increase Rigidities and make costs lower.

The worktable 2 has a front side 22 closing with an operator and a rear side 23 disposed oppositely, the worktable 2 is rotatably mounted on the base 1. A cutting groove is disposed on the worktable 2 parallel to the longitudinal axis 41; a fence 24 is disposed on the worktable 2 to locate the workpieces 200, the fence 24 is perpendicular to the longitudinal axis 41; a anti-falling support rack 25 disposed on the worktable 2 is parallel to a direction of the longitudinal axis 41.

The saw unit comprises a blade 31, a blade shaft 32, a motor 33, a fixed guard 35 and a movable guard(not shown in FIGS), The blade 31 is mounted on the blade shaft 32 and is pivotable about the blade shaft 32; the blade shaft 32 is driven by the motor 33; a handle 36 and a carrying handle 37 are provided on the saw unit 3, the operator grasps the handle 36 to make the saw unit 3 to cut the workpieces, a first switch(not shown in FigS) is provided on the handle 36. the first switch is used to start and turnoff the motor 33; the carrying handle 37 is used for transporting the miter saw 100 expediently; the fixed guard 35 is generally fixed to the motor 33 for covering a part of the blade 31; the moveable guard is pivoted on the fixed guard 35 for covering a spare of the blade 31 with the blade 31 in a noncutting position. the movable guard is pivoted relative to the fixed guard 35 to expose the blade 31 to cut the workpieces. A moveable guard driven mechanism is connected to the moveable guard for opening and closing the moveable guard quickly. The fixed guard 35 is connected to the second support member via a pivot 6, thus the handle 36 can be operated to make the saw unit 3 to perform cutting operation.

A matching mechanism 7 is disposed between the first support member 4 and the second support member 5, the matching mechanism 7 is operated to cause the second support member 5 to move with respect to the first support member 4 frontward or backward along a direction of the longitudinal axis. The cutting operation is performed when the second support member 5 is moved to a plurality of predetermined working positions, but the cutting operation isn't performed when the second support member 5 is in the moving process.

The predetermined working positions should be predetermined, and the predetermined working positions are corresponding to the admissible maximal specifications of workpieces to be cut .The admissible maximal specifications of workpieces to be cut comprises a admissible maximal size of the workpieces to be cut in the direction parallel to the longitudinal axis, that is the workpieces' width, or a admissible maximal size of the workpieces to be cut in the direction perpendicular to the longitudinal axis, that is the workpieces' height.

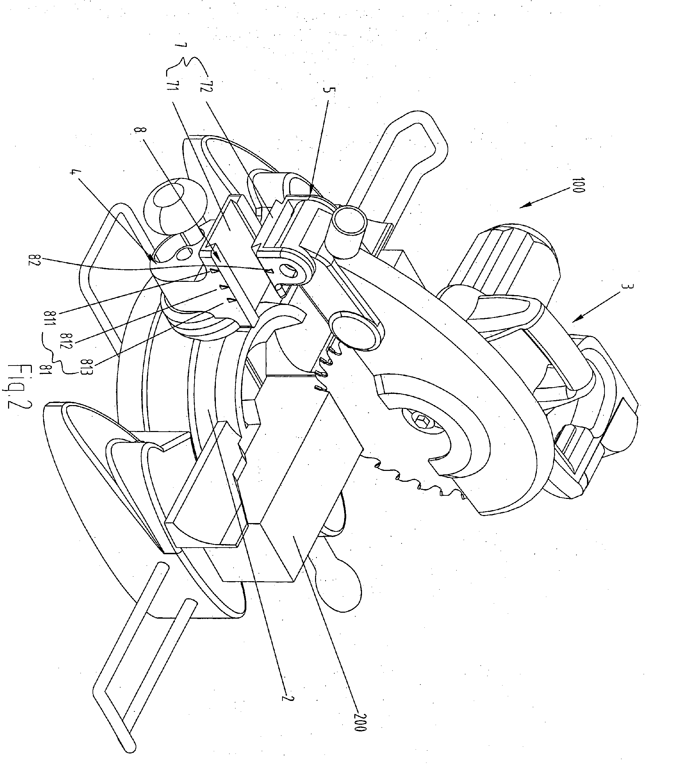

Referring to Fig.2, the matching mechanism 7 comprises a guide groove 71 disposed on the first support member 4 extending along the direction of longitudinal axis 41, and a guide block72 disposed on the second support member 5 for connecting with the guide groove 71. Of course, the guide groove can also be disposed on the second support member 5, the guide block connected with the guide groove is disposed on the first support member 4ₒ

Thus, through a sliding frictional engagement between the guide block 72 and the guide groove 71, the second support member 5 is movable frontward or backward with respect to the first support member along the direction of the longitudinal axis 41, the longitudinal axis 41 is perpendicular to the pivot 6.

The guide block 72 and the second support member 5 are integratly formed. The guide block 72 and the second support member 4 are also integrally formed. Thus the second support member 5 can be slidable with respect to the first support member 4, while other intermedium need not used. So the miter saw has a compact structure and a lower cost. The miter saw slides during the predetermined working positions, and doesn't frequently slide. Thus the abrasion between the guide block 72 and the guide groove 71 is reduced. Of course, to reduce the abrasion, a friction pad is disposed between the guide groove 71 and the guide block 72.

In this embodiment, the guide groove 71 is a swallow-tailed groove. Of course, as is well-known by those skilled in the art, the guide groove 71 is also other shape engaged groove like T-groove or V-groove.

The miter saw 100 comprises a indicating mechanism 8 for indicating the predetermined working positions. Referring to Fig.2, the indicating mechanism 8 comprises working position signs 81 disposed on the first support member 4 and indicating signs 82 disposed on the second support member 5, the indicating signs 82 are corresponding to the working position signs 81 when the second support member 5 is moved to the corresponding work position. In the embodiment, the indicating signs 82 are facing to the working position signs 81 in a direction perpendicular to the longitudinal axis. Of course, the working position signs are also disposed on the second support member 5, while the indicating signs 82 attached to the working position signs are disposed on the first support member 4.

Because the cutting capacity of the miter saw 100 is relative to the position of the pivot 6 of the saw unit 3 with respect to the worktable 2, the indicating sign 82 is best aligned with the pivot 6 in the direction perpendicular to the longitudinal axis 41.

The plurality of predetermined working positions are arranged ordinally in the direction parallel to the longitudinal axis 41. In the embodiment, the miter saw has three working positions. Of course, more or less cutting positions should be provided according to the design requirement.

Referring to Fig.2, the working position signs 81 comprise a first working position sign 811, a second working position sign 812 and a third working position sign 813. Of course, it is best to make the maximal specifications of workpieces to be cut as the working position signs 81.

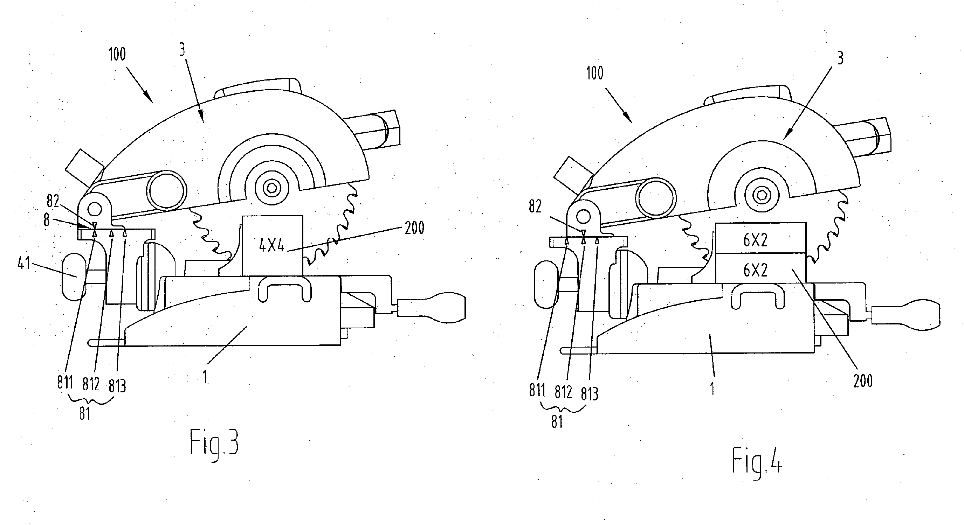

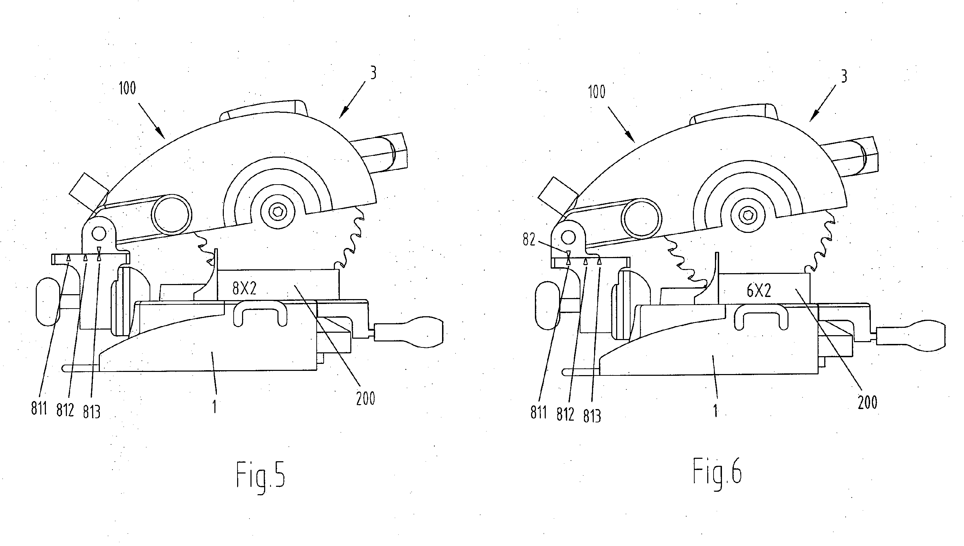

Referring to Fig.3 and Fig.6, the indicating sign 82 is exactly facing to the first working position sign 811 in a first work position, now the maximal specifications of the workpieces to be cut is max width 6inches with max height 2inches, or max width 4inches with max height 4inches. That is to say, in the first work position, the miter saw can completely cut the workpieces which is smaller than the maximal specifications of workpieces to be cut . Such as the workpieces are smaller or equal to 6inches in the direction parallel to the longitudinal axis, and smaller or equal to 2inches in the direction perpendicular to the longitudinal axis. In regard to some circumstances, although the admissive maximal specifications of workpieces to be cut are 6*4inches, actual cutting size may be attained 6.5*4.5 inches. In addition, the miter saw can cut some workpieces at the same time. The sizes of being added of some workpieces are in the maximal cutting range.

Referring to Fig.4, the indicating sign 82 is exactly facing to the second working position sign 812 in a second work position, now the maximal specifications of the workpieces to be cut is max width 6inches with max height 4inches. That is to say, in the second work position, the miter saw can completely cut the workpieces which is smaller than maximal specifications of the workpieces to be cut.

Referring to Fig. 5, the indicating sign 82 is exactly facing to the third working position sign 812 in a third work position, now the maximal specifications of the workpieces to be cut is max width 8inches with max height 2inches. That is to say, in the third work position, the miter saw can completely cut the workpieces which is smaller than maximal specifications of the workpieces to be cut.
a matching mechanism 7 is disposed between the first support member 4 and the second support member 5, the matching mechanism 7 can cause the second support member 5 to move with respect to the first support member 4 along the direction of the longitudinal axis 41, and the cutting operation is performed in the plurality of predetermined working positions. So the cutting capacity is increased, the miter saw can cut workpieces with more specifications. The miter saw has a compact structure and a lower cost.

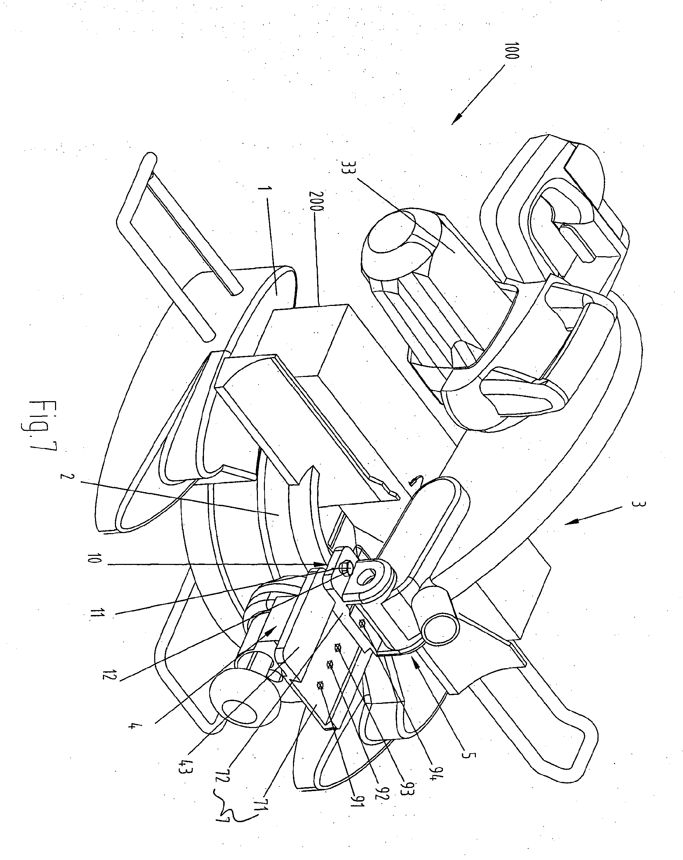

Referring to Fig. 7, the miter saw 100 further comprises a positioning mechanism 9 for determining the position of the second support member 5 at the corresponding predetermined working positions with respect to the first support member 4..

The positioning mechanism 9 comprises a first receiving groove91, second receiving groove 92 and third receiving groove 93 being corresponding to the three predetermined working positions disposed on the first support member 4; a stop member(not shown in Figs) is disposed on the second support member 5 to attached with the first receiving groove91, second receiving groove 92 and third receiving groove 93; a spring(not shown in Figs) is disposed in the second support member 5, the spring and the stop member are all received in a stop groove 94 disposed on the second support member. The spring urges the stop member always toward the attached direction to the first receiving groove91, second receiving groove 92 and third receiving groove 93. In the embodiment, the stop member 94 is a steel ball. Because being pressed by the spring, a portion of the steel ball is exposed beyond the surface of the second support member. So the steel ball is attached with corresponding receiving groove to perform reliable stop at the working positions.

In the first work position, the stop member is attached with the first receiving groove 91 to surely position the second support member 5 at the first work position. As such, In the second working position, third working position, the stop member is respectively attached with the second, third receiving grooves 92,93 to surely position the second support member 5 at the second working position, third working position.

If receiving grooves corresponding to three predetermined working positions are disposed on the second support member 5, and a stop member attached with the receiving grooves is disposed on the first support member, the second support member 5 is positioned at the corresponding working positions with respect to the first support member 4.

Of course, the positioning mechanism can also be other mode. For example, a stop groove is attached with a stop pin to position the second support member 5 at the corresponding working positions with respect to the first support member 4.

Referring to Fig.7, the miter saw further comprises a lock device to lock the second support member 5 at the corresponding working positions with respect to the first support member 4, so the cutting precision is made sure.

The lock device 10 comprises a thread hole 11 disposed on the second support member 5, a lock member 12 attached with the thread hole 11, and a contact surface 43 attached with the lock member 12. the contact surface 43 is disposed on the first support member 4. When the second support member 5 is slid at the corresponding working positions with respect to the first support member 4, the lock member 12 is turned tight to closely contact with the contact surface 43, thus the second support member 5 is locked with respect to the first support member 4. The lock member 12 is turned loose to disengage the contact surface 43, thus the second support member 5 can move with respect to the first support member 4.

If the thread hole and the lock member attached with the thread hole are disposed on the first support member 4, and the contact surface attached with the lock member is disposed on the second support member 5, the second support member 5 is also locked at the corresponding working positions with respect to the first support member 4.

Besides mechanical lock, the lock device is electromagnetism lock. A winding is disposed on the one of the second support member 5 and the first support member 4, a winding or a permanent magnet is disposed on the other one of the second support member 5 and the first support member 4, a second switch is disposed on the handle or where the operator operate expediently, the second switch is connected to the winding by a wire. So when the second switch is started, the winding connected to the second switch, and the other winding or the permanent magnet generate inverted magnetic field to lock the second support member 5 on the first support member 4. When the second switch is turned off, the winding connected to the second switch, and the other winding or the permanent magnet don't generate inverted magnetic field, thus, the second support member 5 is movable with respect to the first support member 4.

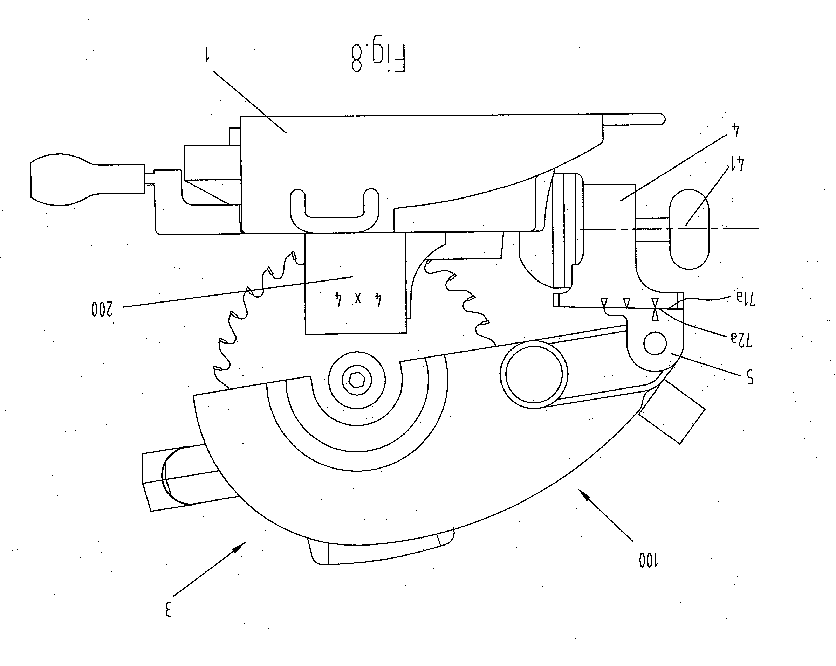

The spirit of the present invention also admit that a connected surface between the first support member 4 and the second support member 5 isn't parallel to the direction of the longitudinal axis 41, that is to say, the second support member 5 needn't always moved along the direction of the longitudinal axis 41 with respect to the first support member 4. Referring to Fig.8, the matching mechanism 7a comprises a guide groove 71 a disposed on the first support member 4, and a guide block 72a disposed on the second support member 5, a connected surface between the guided groove 71 a and the guided block 72a inclines relative to the direction of longitudinal axis 41, so the connected surface has a certain height difference. Thus the cutting capacity of the miter saw is increased. In addition, the connected surface may be not a plane, may also be a curve surface or other shape suface.

At this time, the projections of the plurality of predetermined working positions are arranged ordinally in a direction of the longitudinal axis 41. That is to say, although a actual moved direction of the second support member with respect to the first support member isn't always parallel to the direction of the longitudinal axis, the actual moved direction has a subdivision in a direction of parallel to longitudinal axis.

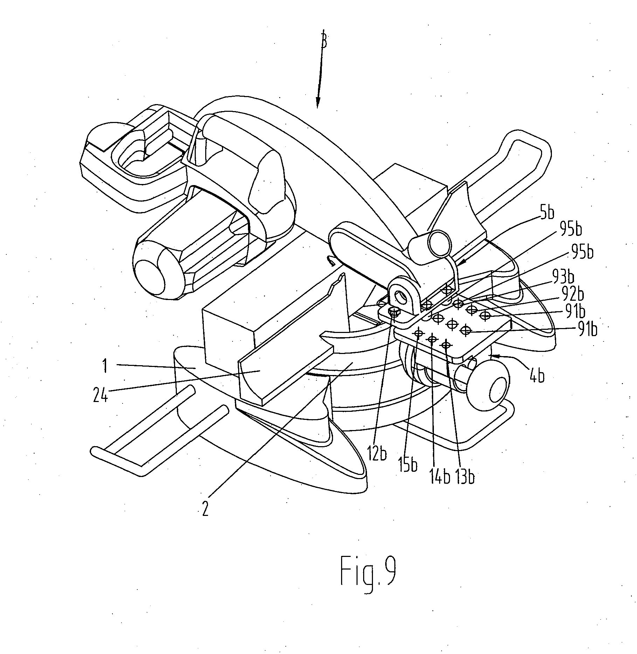

Of course, the second support member is movable frontward or backward with respect to the first support member by unslidable mode. Referring to Fig.9, a first, second and third receiving groove 91b,92b,93b disposed on the first support member 4b are corresponding to the three predetermined working positions; a stop pin 95b disposed on the second support member 5b is attached with the first, second and third receiving groove 91b,92b,93b; a pivotable lock member 12b is disposed on the second support member 5b,a first, second, third lock holes 13b,14b,15b attached with the lock member 12b are disposed on the first support member 4b.

The lock member 12b is turned tight to attach to the first lock hole 13b when the stop pin 95b is attached to the first receiving groove 91b to surely lock the second support member 5b at the first work position. The lock member 12b is turned loose to disengage the first lock hole 13b, thus the second support member 5b is moved with respect to the first support member 4b.

As such, In the second working position, third working position, when the stop pin 95b is respectively attached to the second, third receiving grooves 92b,93b, The lock member 12b is turned tight to attach to the second, third lock holes 14b,15b to surely lock the second support member 5 at the second working position, third working position. The lock member 12b is turned loose to disengage the second, third lock holes 14b,15b, thus the second support member 5b is moved with respect to the first support member 4b.

At this time, projections of the plurality of the predetermined working positions on the longitudinal axis are arranged ordinally.

## Claims

1. A miter saw, for cutting workpieces, wherein the miter saw comprising:
a worktable for supporting the workpieces to be cut;
a first support member attached to the worktable, the first support member defining a longitudinal axis extending along a frontward and backward direction;
a second support member attached to the first support member,
a saw unit pivotally connected to the second support member via a pivot, the saw unit comprising a motor and a blade rotatably driven by the motor;
a matching mechanism disposed between the first support member and the second support member, the matching mechanism being operated to cause the second support member to move with respect to the first support member frontward and backward.

2. The miter saw according to claim1,wherein the second support member is movable with respect to the first support member to a plurality of predetermined working positions and then to perform cutting operation.

3. The miter saw according to claim2, wherein projections of the predetermined working positions on the longitudinal axis are arranged ordinally.

4. The miter saw according to claim2, wherein the predetermined working positions are arranged parallel to the longitudinal axis.

5. The miter saw according to claim1, wherein the second support member is slidable with respect to the first support member along a direction parallel to the longitudinal axis.

6. The miter saw according to claim2, wherein the miter saw has a maximal specifications of the workpieces to be cut to be admissible, the predetermined working positions are corresponding to the admissible maximal specifications of workpieces to be cut .

7. The miter saw according to claim6, wherein the admissible maximal specifications of workpieces to be cut comprises a admissible maximal size of the workpieces in the direction parallel to the longitudinal axis.

8. The miter saw according to claim6, wherein the admissible maximal specifications of workpieces to be cut comprises a admissible maximal size of the workpieces in the direction perpendicular to the longitudinal axis.

9. The miter saw according to claim2, wherein the miter saw further comprises an indicating mechanism for indicating the predetermined working positions.

10. The miter saw according to claim9, wherein the indicating mechanism comprises working position signs disposed on one of the first support member and the second support member, and indicating signs disposed on the other one of the first support member and the second support member, the indicating sign is exactly facing to the working position sign when the second support member is moved to the corresponding work position.

11. The miter saw according to claim10, wherein the indicating sign is disposed on the second support member, and the indicating sign is aligned with the pivot in the direction perpendicular to the longitudinal axis.

12. The miter saw according to claim1, wherein the matching mechanism comprises a guide groove disposed on one of the first support member and the second support member, and a guide block disposed on the other one of the first support member and the second support member for engaging with the guide groove.

13. The miter saw according to claim2, wherein the miter saw further comprises a positioning mechanism for determining the position of the second support member at the corresponding predetermined working positions.

14. The miter saw according to claim2, wherein the miter saw further comprises a lock mechanism for reliable fixing of the second support member at the corresponding predetermined working positions.

15. The miter saw according to claim1, wherein a cutting groove extending in a direction parallel to the longitudinal axis is disposed on the worktable.

16. The miter saw according to claim1, wherein a fence for supporting the workpieces is disposed on the worktable, and the fence is perpendicular to the longitudinal axis.

17. The miter saw according to claim1, wherein the worktable comprises a base and a rotating table rotatable with respect to the base, and the first support member is connected with the rotating table.

18. The miter saw according to claim1, wherein the first support member is rotatable with respect to the worktable about the longitudinal axis.

19. The miter saw according to claim1, wherein the saw unit further comprises a handle for driving the saw unit to be pivotable about the pivot.

20. The miter saw according to claim1, wherein the first support member or the second support member is made of iron-based materials.
